# FASCICULE DE BREVET EUROPEEN

(11) **EP 0 345 704 B1**
(45) Date de publication et mention de la délivrance du brevet: **21.07.1993**
(21) Numéro de dépôt: 89110155.2
(22) Date de dépôt: 05.06.1989
(51) Int. Cl.: G21C 17/10, G21C 7/36

(54) **Procédé et dispositif de détection de la chute d'une grappe de contrôle d'un réacteur nucléaire**
Verfahren und Vorrichtung zur Feststellung einer gefallenen Regelstabspinne eines Kernreaktors
Method and device for detecting a dropped control cluster of a nuclear reactor

(30) Priorité: 08.06.1988 FR 8807622
(43) Date de publication de la demande: 13.12.1989
(73) Titulaire: FRAMATOME, 92400 Courbevoie (FR)
(72) Inventeur: Foret, François, F-92400 Courbevoie (FR)
(74) Mandataire: Weinmiller, Jürgen

(56) Documents cités:
- EP-A- 0 127 532
- EP-A- 0 200 999
- US-A- 4 016 034
- US-A- 4 066 497
- PATENT ABSTRACTS OF JAPAN, vol. 9, no. 246 (P-393)[1969], 3 octobre 1985, page 50 P 393 & JP-A-60 98 309 (MITSUBISHI DENKI K.K.) 01-06-1985

## Description

La présente invention concerne le pilotage d'une centrale nucléaire et plus spécifiquement la détection de la chute de grappes de contrôle dans le coeur du réacteur d'une telle centrale. Cette détection doit être assurée en tenant compte du fait qu'un composant ou un ensemble de composants constituants une chaîne de protection peut être défaillant. Il est important que, malgré la possibilité d'une telle défaillance la chute d'une grappe soit détectée avec toute la sécurité requise. On sait que de telles grappes sont constituées de barres absorbant les neutrons et que c'est par leurs déplacements que l'on assure la régulation et la commande de la puissance nucléaire, c'est-à-dire de la puissance dégagée par la réaction. Elles sont réparties sur la section horizontale du coeur. Elles se déplacent verticalement dans les deux sens. Elles sont accrochées pour cela à un mécanisme convenable qui est situé au dessus du coeur et que l'on commande, pour faire pénétrer plus ou moins leurs barres absorbantes dans ce dernier. Une défaillance de ce mécanisme ou d'un organe d'accrochage peut provoquer une chute de la grappe dans le coeur.

Une telle chute provoque une décroissance locale de la puissance nucléaire, donc une décroissance de la puissance globale du coeur. La présence d'une boucle de régulation de puissance fait que cette dernière décroissance est rapidement compensée par une remontée des autres grappes de contrôle. Mais, entre autres inconvénients, apparaît alors une distorsion du flux neutronique qui ralentit la combustion des éléments combustibles voisins de la grappe accidentée et accélère celle des autres. De plus les possibilités d'action sur la réaction sont diminuées. C'est notamment pourquoi il est souhaité de détecter aussi rapidement et sûrement que possible de telles chutes accidentelles pour procéder alors à un arrêt d'urgence du réacteur et rétablir un fonctionnement normal de ce dernier.

Il est par ailleurs nécessaire d'éviter de procéder à un tel arrêt d'urgence lorsque cela n'est pas nécessaire, car un tel arrêt est coûteux notamment parce qu'il diminue la disponibilité de la centrale nucléaire pour fournir de l'électricité.

Selon un procédé connu (EP-A-0127532) la détection des chutes de grappes de contrôle se fait grâce à des moyens de détection qui s'appliquent en même temps à d'autres types d'accidents. Plus précisément ces moyens détectent les températures excessives qui provoquent l'apparition de poches de vapeur en certains points du coeur, le long des crayons constituants les éléments combustibles. Lorsqu'il y a chute accidentelle d'une grappe, la première montée de puissance nucléaire à un certain niveau après cette chute fait apparaître un tel excès de température ou poche de vapeur le long d'un élément combustible dont la combustion est accélérée par la distorsion du flux. Des moyens de protection automatiques différents provoquent alors l'arrêt d'urgence du réacteur. On détermine ensuite la cause de cet arrêt et on répare les conséquences de l'accident avant la remise du réacteur en service.

Ce procédé connu présente l'inconvénient que, surtout si l'antiréactivité de la grappe accidentée est relativement faible, il peut d'écouler un temps assez long avant que la puissance nucléaire soit élevée suffisamment haut pour provoquer le processus d'arrêt décrit ci-dessus. Le taux de combustion de certains éléments combustibles peut alors être plus important et entraîner de ce fait un début d'ébullition nucléée.

D'autres procédés de détection de la chute d'une grappe de contrôle sont de'crits dans EP-A-0200999 et JP-A-60098309

La présente invention a notamment pour but de permettre une détection rapide et sûre de la chute d'une grappe de contrôle, même dans le cas d'une grappe dont la chute ne provoque qu'une petite variation de la puissance nucléaire en raison de sa position et/ou de la faiblesse de son antiréactivité, et ceci en évitant autant que possible le risque qu'une détection erronée provoque un arrêt d'urgence du réacteur sans nécessité réelle. Elle a aussi pour but, grâce à une telle détection, de mieux protéger le réacteur d'une centrale contre les conséquences dommageables qui résulteraient de la continuation de la réaction nucléaire de service normal après une telle chute, tout en préservant la disponibilité de cette centrale.

Et elle vise à atteindre ces buts d'une manière simple et économique.

C'est dans ces buts qu'elle a notamment pour objet un procédé de détection de la chute d'une grappe de contrôle d'un réacteur nucléaire, procédé selon lequel on mesure de manière prolongée des paramètres sensibles aux déplacements des grappes de contrôle de ce réacteur et on engendre un signal de chute de grappe lorsque l'un de ces paramètres présente une vitesse de variation supérieure à un seuil d'alerte prédéterminé correspondant à ce paramètre, procédé caractérisé par le fait que l'on mesure desdits paramètres sensibles appartenant à au moins premier et un deuxième types de paramètres, ce premier type étant constitué par des paramètres de positions représentatifs des positions desdites grappes de contrôle elles-même, ce second type étant constitué par des paramètres qui sont sensibles aux déplacements des grappes de contrôle même lorsque ces grappes sont situées à distance des points où ces paramètres sont mesurés,
on mesure les paramètres de chacun de ces deux types dans au moins deux zones du coeur de ce réacteur,
et on engendre ledit signal de chute de grappe lorsque au moins deux dits paramètres sensibles présentent une vitesse de variation supérieure aux dits seuils d'alerte correspondants, l'un de ces paramètres étant un dit paramètre de position.

Selon une disposition préférée ledit deuxième et éventuellement un troisième dits types de paramètres sensibles sont constitués par des paramètres de flux neutronique représentatifs des puissances nucléaires dégagées dans ledites zones du coeur ou/et par des paramètres de flux thermique représentatifs de flux thermiques évacués par un fluide caloporteur circulant dans ces zones.

La présente invention a également notamment pour objet un dispositif de détection de la chute d'une grappe de contrôle d'un réacteur nucléaire dans le coeur de celui-ci, ce coeur comportant plusieurs zones pourvues chacune,
- d'un moyen de mesure thermique pour fournir un signal de flux thermique correspondant à cette zone et représentatif d'un flux thermique évacué par la circulation d'un fluide caloporteur dans cette zone,
- d'un moyen de mesure neutronique pour fournir un signal de flux neutronique correspondant à cette zone et représentatif d'une puissance nucléaire dans cette zone,
- et de plusieurs grappes de contrôle, chacune de ces grappes de contrôle étant pourvue d'un moyen de mesure pour fournir un signal de position de grappe représentatif de la position de cette grappe, ce dispositif comportant des moyens de dérivation et de comparaison pour recevoir des signaux sensibles aux déplacements des grappes de contrôle, et pour fournir des signaux d'alerte correspondants lorsque ces signaux sensibles présentent des vitesses de variation supérieures à des seuils d'alerte prédéterminés correspondants,
- et des moyens de traitement logique pour fournir un signal de chute de grappe en présence de certains desdits signaux d'alerte,
- ce dispositif étant caractérisé par le fait que lesdits signaux d'alerte appartiennent à au moins un premier et un deuxième types de signaux, ce premier type étant constitué par des signaux d'alerte de position correspondant aux dits signaux de position de grappe, un deuxième type étant constitué par des signaux d'alerte thermique correspondant aux dits signaux de flux thermique et/ou par des signaux d'alerte neutronique correspondant aux dits signaux de flux neutronique, lesdits moyens de traitement logique fournissant ledit signal de chute de grappe lorsqu'ils recoivent au moins deux dits signaux d'alerte dont au moins un dit signal d'alerte de position.

Selon la présente invention, on peut adopter en outre, les dispositions préférées suivantes :
- Lesdits moyens de traitement logique constituent,
- des unités logiques primaires pour recevoir chacune desdits signaux d'alerte de position correspondant à au moins une desdites zones du coeur et au moins un dit signal d'alerte du deuxième type correspondant à une autre desdites zones, et pour fournir un signal de détection primaire lorsqu'au moins un de ces signaux d'alerte est présent,
- et un circuit de regroupement recevant lesdits signaux de détection primaire et lesdits signaux d'alerte de position et fournissant ledit signal de chute de grappe lorsqu'au moins deux de ces signaux de détection primaire et au moins un de ces signaux d'alerte de position sont présents.
- Lesdits moyens de dérivation et de comparaison sont associés aux dites unités logiques primaires de manière que chacune de ces unités logiques constitue, avec une partie correspondante de ces moyens, une unité d'acquisition.
- Lesdites unités d'acquisition forment une succession correspondant à celle desdites zones du coeur du réacteur nucléaire.
- Chacune desdites unités d'acquisition reçoit un groupe de dits signaux de position de grappe correspondant à une dite zone de coeur, ledit signal de flux neutronique correspondant à une autre zone de coeur, et ledit signal de flux thermique correspondant à encore une autre zone du coeur, de manière que lesdits signaux de flux neutronique, lesdits signaux de flux thermique et lesdits groupes de signaux de position de grappes soient reçus chacun par une et une seule unité d'acquisition.

A l'aide des figures schématiques ci-jointes on va décrire ci-après, à titre d'exemple non limitatif, comment l'invention peut être mise en oeuvre. Dans cette description les dispositions présentées ci-dessus comme préférées selon la présente invention doivent être considérées comme utilisées. Il doit par ailleurs être compris que les éléments décrits et représentés peuvent, sans sortir du cadre de l'invention, être remplacés par d'autres éléments assurant les mêmes fonctions techniques.

La figure 1 représente une vue en coupe horizontale d'un réacteur nucléaire muni d'un dispositif selon l'invention.

La figure 2 représente un schéma par blocs de ce dispositif.

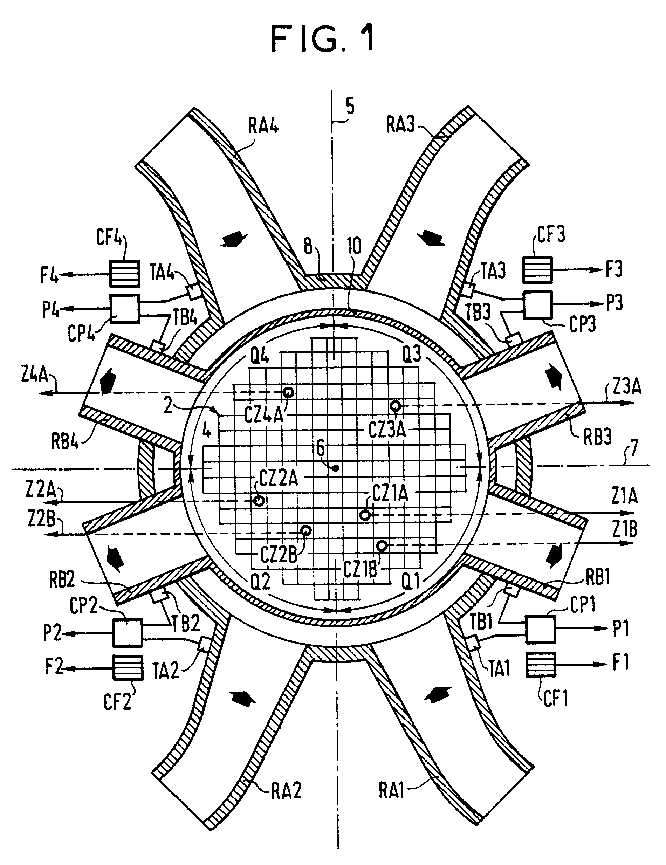

Conformément à la figure 1 le coeur 2 du réacteur d'une centrale nucléaire à eau pressurisée est constitué par la juxtaposition, selon un réseau horizontal à mailles carrées, de logements tels que 4 qui s'étendent verticalement sur toute la hauteur du coeur et qui contiennent des éléments combustibles non représentés. Certains de ces logements sont occupés par des grappes de contrôle non représentées et munies chacune, au dessus du coeur, d'une part d'un mécanisme non représenté pour commander son déplacement vertical, d'autre part d'un moyen de mesure de position tels que CZ2A et CZ2B pour mesurer en permanence l'altitude de la grappe, c'est-à-dire sa position dans son logement. Ces derniers moyens de mesure fournissent des signaux de position tels que Z2A et Z2B.

Le coeur 2 présente un axe vertical 6 et est divisé selon deux plans de symétrie 5 et 7 en quatre quadrants Q1, Q2, Q3 et Q4 qui se succèdent angulairement autour de cet axe et qui constituent lesdites zones du coeur.

Les éléments spécifiquement affectés à un tel quadrant sont désignés par une ou plusieurs lettres suivies d'un numéro de 1 à 4 qui est le numéro de ce quadrant. Une autre lettre suivant ce numéro est utilisée dans l'ordre de l'alphabet pour distinguer les uns des autres plusieurs éléments spécifiques de même nature, par exemple lesdits moyens de mesure de position de grappe CZ2A, CZ2B etc..., qui sont affectés à un même quadrant, par exemple le deuxième quadrant Q2.

Dans chaque quadrant le nombre des grappes de contrôle est par exemple de 18, de même que celui des moyens de mesure distincts utilisés pour indiquer les positions de ces grappes, et celui des signaux de position tels que Z2A et Z2B qui sont fournis par ces moyens de mesure.

Le coeur 2 est contenu dans une cuve étanche 8 résistant à la pression de l'eau d'un circuit de refroidissement primaire et contenant une jupe intérieure 10 entourant le coeur. L'eau arrive au haut de la cuve par des canalisations d'entrée, descend autour de cette jupe jusqu'au bas de la cuve, passe radialement à l'intérieur de la jupe au bas de la cuve, remonte en refroidissant les élément combustibles et sort au haut de la cuve par des canalisations de sortie qui sont raccordées pour cela à la jupe. Plus précisément les éléments combustibles des quadrants Q1, Q2, Q3 et Q4 sont refroidis par l'eau entrant par quatre canalisations d'entrée RA1, RA2, RA3 et RA4, et sortant par quatre canalisations des sortie RB1, RB2, RB3 et RB4 faisant partie de quatre boucles de refroidissement primaire, respectivement.

Ces canalisations sont munies de capteurs de température TA1, TA2, TA3, TA4, TB1, TB2, TB2 et TB4 respectivement. Les deux capteurs de température tels que TA3 et TB3 affectés à un même quadrant tel que Q3 sont connectés à un moyen de mesure de flux thermique tel que CP3 qui élabore un signal de flux thermique tel que P3 qui représente le flux thermique évacué par la circulation de l'eau dans ce quadrant. Pour obtenir ce signal le moyen de mesure tel que CP3 multiplie la différence des températures d'entrée et de sortie par le débit d'eau, ce débit étant connu par des moyens non représentés qui mesurent par exemple la vitesse des pompes du circuit de refroidissement primaire comportant les canalisations d'entrée et de sortie. Le moyen de mesure CP3 effectue de plus diverses opérations de correction sans rapport avec la présente invention, notamment la mesure de la pression dans le pressuriseur du circuit de refroidissement, pour que le signal de flux thermique obtenu représente aussi fidèlement que possible les variations du flux thermique au cours du temps. Les moyens de mesure CP1, CP2 et CP4 fonctionnent comme les moyens CP3 pour fournir des signaux P1, P2 et P4 respectivement.

Chacun des quadrants Q1, Q2, Q3, Q4 est muni d'un moyen de mesure CF1, CF2, CF3, CF4 qui fournit un signal de flux neutronique F1, F2, F3, F4 représentatif du flux neutronique moyen régnant dans ce quadrant, respectivement.

Les signaux de position de grappe, de flux thermique et de flux neutronique ainsi obtenus constituent les signaux sensibles qui ont été précédemment mentionnés, les paramètres sensibles étant ceux qui sont représentés par ces signaux.

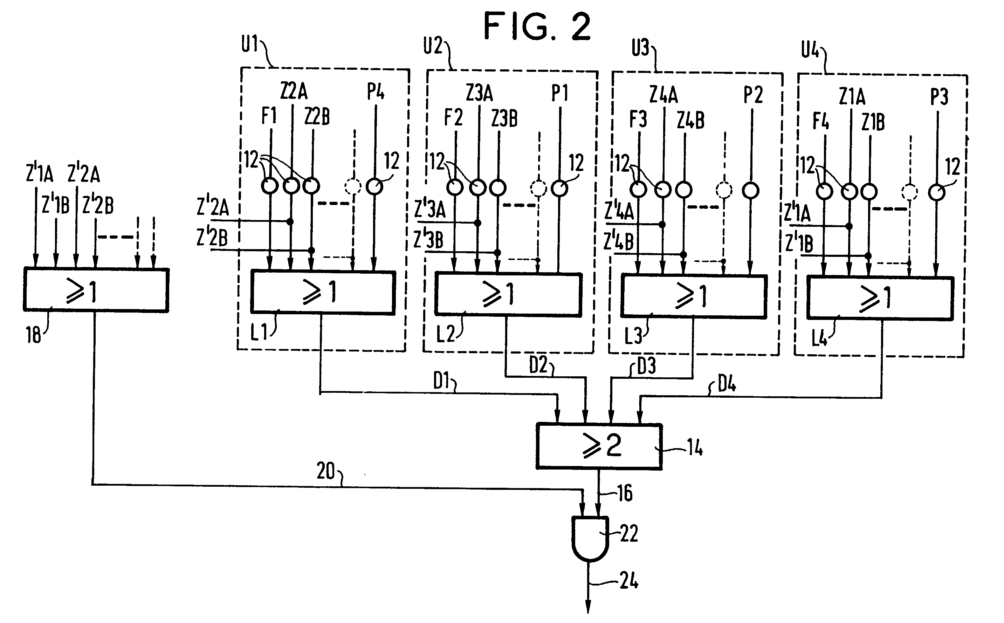

Conformément à la figure 2 le dispositif selon l'invention comporte quatre unités d'acquisition U1, U2, U3 et U4 recevant lesdits signaux sensibles. Chacune de ces unités, par exemple U1, reçoit le signal de flux neutronique par exemple F1 correspondant à un quadrant, par exemple Q1, le signal de flux thermique, par exemple P4, correspondant à un autre quadrant, par exemple Q4, et le groupe des signaux de positions de grappes, par exemple Z2A, Z2B, etc... qui correspond à encore un autre quadrant, par exemple Q2.

Chacune de ces unités comporte, pour chacun de ces signaux, des moyens de dérivation et de comparaison tels que 12 qui reçoivent le signal sensible correspondant et fournissent un signal d'alerte correspondant lorsque ce signal sensible présente une vitesse de variation supérieure à un seuil d'alerte prédéterminé correspondant. Le traitement subi par ce signal sensible est en fait plus complexe que cela pour tenir compte, notamment, des divers décalages temporels que ces signaux présentent, en raison des conditions de mesure, par rapport aux paramètres physiques réels qu'ils représentent.

Chaque signal d'alerte, par exemple F′1 ou Z′2A, est désigné par les mêmes lettres et chiffres que le signal sensible correspondant, par exemple F1 ou Z2A, avec une apostrophe en plus.

Au sein de chacune des unités d'acquisition U1, U2, U3, U4, une unité logique primaire, L1, L2, L3, L4, respectivement, reçoit tous les signaux d'alerte fournis par les moyens de dérivation et de comparaison tels que 12 et fournit un signal de détection primaire D1, D2, D3, D4 respectivement, lorsque un au moins de ces signaux d'alerte est présent.

Un circuit 14 reçoit ces signaux de détection primaire et fournit un signal 16 lorsque deux au moins de ces signaux de détection primaires sont présents.

Par ailleurs une porte OU 18 reçoit tous les signaux d'alertes de position Z′1A, Z′1B,...Z′2A, Z′2B...Z′3A,...Z′4A..., obtenus à partir des signaux de position de grappes, et fournit un signal 20 lorsque l'un au moins de ces signaux d'alerte de position est présent.

Une porte ET 22 fournit le signal de chute de grappe 24 lorsque le signal 16 et le signal 20 sont simultanément présents. Le circuit 14 et les portes 18 et 22 constituent le circuit de regroupement précédemment mentionné.

On voit sur la figure 2 qu'un arrêt d'urgence du réacteur ne peut être commandé par le signal de détection de chute de grappe 24 que s'il y a décroissance rapide du flux neutronique ou de la puissance thermique accompagné d'au moins une décroissance rapide d'un signal de position de grappe. Il ne risque notamment pas de l'être de manière intempestive pendant un îlotage de la centrale, c'est à lorsque celle-ci est provisoirement déconnectée du réseau électrique qu'elle est chargée d'alimenter.

En effet, pendant un tel îlotage, la puissance du réacteur décroît de manière progressive pour ajuster la puissance à la valeur voulue. Les grappes de contrôle sont insérées de façon à parcourir leur course totale en quelques minutes alors que dans le cas d'une chute, une grappe tombe dans un temps inférieur à la minute.

## Revendications

1. Procédé de détection de la chute d'une grappe de contrôle d'un réacteur nucléaire, procédé selon lequel on mesure de manière prolongée des paramètres sensibles aux déplacements des grappes de contrôle de ce réacteur et on engendre un signal de chute de grappe lorsque l'un de ces paramètres présente une vitesse de variation supérieure à un seuil d'alerte prédéterminé correspondant à ce paramètre, procédé caractérisé par le fait que l'on mesure desdits paramètres sensibles appartenant à un moins premier et un deuxième types de paramètres, ce premier type étant constitué par des paramètres de positions représentatifs des positions desdites grappes de contrôle elles-mêmes, ce second type étant constitué par des paramètres qui sont sensibles aux déplacements des grappes de contrôle même lorsque ces grappes sont situées à distance des points où ces paramètres sont mesurés,
on mesure les paramètres de chacun de ces deux types dans au moins deux zones (Q1, Q2, Q3, Q4) du coeur, de ce réacteur,
et on engendre ledit signal de chute de grappe (24) lorsque au moins deux dits paramètres sensibles présentent une vitesse de variation supérieure aux dits seuils d'alerte correspondants, l'un de ces paramètres étant un dit paramètre de position.

2. Procédé selon la revendication 1, caractérisé en ce que ledit deuxième et éventuellement un troisième dits types de paramètres sensibles sont constitués par des paramètres de flux neutronique représentatif des puissances nucléaires dégagées dans ledites zones (Q1, Q2, Q3, Q4) du coeur ou/et par des paramètres de flux thermique représentatifs de flux thermiques évacués par un fluide caloporteur circulant dans ces zones.

3. Dispositif de détection de la chute d'une grappe de contrôle d'un réacteur nucléaire dans le coeur de celui-ci, ce coeur comportant plusieurs zones (Q1, Q2, Q3, Q4) pourvues chacune (Q1),
- d'un moyen de mesure thermique (TA1, TB1, CP1) pour fournir un signal de flux thermique (P1) correspondant à cette zone et représentatif d'un flux thermique évacué par la circulation d'un fluide caloporteur dans cette zone,
- d'un moyen de mesure neutronique (CF1) pour fournir un signal de flux neutronique (F1) correspondant à cette zone et représentatif d'une puissance nucléaire dans cette zone,
- et de plusieurs grappes de contrôle, chacune de ces grappes de contrôle étant pourvue d'un moyen de mesure (CZ1A, CZ1B...) pour fournir un signal de position de grappe (Z1A, Z1B...) représentatif de la position de cette grappe,
ce dispositif comportant des moyens de dérivation et de comparaison (12) pour recevoir des signaux sensibles aux déplacements des grappes de contrôle, et pour fournir des signaux d'alerte correspondants lorsque ces signaux sensibles présentent des vitesses de variation supérieures à des seuils d'alerte prédéterminés correspondants,
- et des moyens de traitement logique pour fournir un signal de chute de grappe en présence de certains desdits signaux d'alerte,
- ce dispositif étant caractérisé par le fait que lesdits signaux d'alerte appartiennent à au moins un premier et un deuxième types de signaux, ce premier type étant constitué par des signaux d'alerte de position (Z′1A, Z′1B,..., Z′2A, Z′2B..., Z′3A, Z′3B,..., Z′4A, Z′4B,...) correspondant aux dits signaux de position de grappe (Z1A, Z1B,..., Z2A, Z2B..., Z3A, Z3B,..., Z4A, Z4B,...) un deuxième type étant constitué par des signaux d'alerte thermique (P′1, P′2, P′3, P′4) correspondant aux dits signaux de flux thermique (P1, P2, P3, P4) et/ou par des signaux d'alerte neutronique (F′1, F′2, F′3, F′4) correspondant aux dits signaux de flux neutronique (F1, F2, F3, F4), lesdits moyens de traitement logique (L1, L2, L3, L4, 14, 18, 22) fournissant ledit signal de chute de grappe (24) lorsqu'ils reçoivent au moins deux dits signaux d'alerte dont au moins un dit signal d'alerte de position.

4. Dispositif selon la revendication 3, caractérisé en ce que lesdits moyens de traitement logique constituent,
- des unités logiques primaires (L1, L2, L3, L4) pour recevoir chacune (L1) desdits signaux d'alerte de position (Z′2A, Z′2B...) correspondant à au moins une desdites zones du coeur (Q2) et au moins un (F′1, P′4) dit signal d'alerte du deuxième type correspondant à une autre desdites zones (Q4), et pour fournir un signal de détection primaire (D1) lorsqu'au moins un de ces signaux d'alerte est présent,
- et un circuit de regroupement (14, 18, 22) recevant lesdits signaux de détection primaire (D1, D2, D3, D4) et lesdits signaux d'alerte de position (Z′1A, Z′1B,..., Z′2A, Z′2B..., Z′3A, Z′3B,..., Z′4A, Z′4B,...) et fournissant ledit signal de chute de grappe (24) lorsqu'au moins deux de ces signaux de détection primaire et au moins un de ces signaux d'alerte de position sont présents.

5. Dispositif selon la revendication 4, caractérisé par le fait que lesdits moyens de dérivation et de comparaison (12) sont associés aux dites unités logiques primaires (L1, L2, L3, L4) de manière que chacune de ces unités logiques (L1) constitue, avec une partie correspondante de ces moyens, une unité d'acquisition (U1).

6. Dispositif selon la revendication 5, caractérisé par le fait que lesdites unités d'acquisition (U1, U2, U3, U4) forment une succession correspondant à celle desdites zones (Q1, Q2, Q3, Q4) du coeur du réacteur nucléaire.

7. Dispositif selon la revendication 6, caractérisé par le fait que chacune desdites unités d'acquisition (U1) reçoit un groupe de dits signaux de position de grappe (Z2A, Z2B...,...) correspondant à une dite zone de coeur (Q2), ledit signal de flux neutronique (F1) correspondant à une autre zone de coeur (Q1), et ledit signal de flux thermique (P4) correspondant à encore une autre zone du coeur (Q4), de manière que lesdits signaux de flux neutronique (F1, F2, F3, F4), lesdits signaux de flux thermique (P1, P2, P3, P4) et lesdits groupes de signaux de position de grappe (Z1A, Z1B... Z2A, Z2B..., Z3A, Z3B..., Z4A, Z4B...) soient reçus chacun par une et une seule unité d'acquisition (U1, U2, U3, U4).

## Claims

1. A method of detecting the fall of a control cluster in a nuclear reactor, wherein parameters sensitive to displacements of the control clusters of the reactor are measured on a long-term basis, and a cluster fall signal is generated when one of said parameters varies at a speed greater than a predetermined alarm threshold corresponding to said parameter, this method being characterized in that said sensitive parameters which are measured include parameters of at least a first type and a second type, said first type being constituted by position parameters representative of the positions of said control clusters themselves, and said second type being constituted by parameters which are sensitive to displacements of control clusters even when said clusters are situated at a distance from points where said parameters are measured, that the parameters of each of these two types are measured in at least two zones (Q1, Q2, Q3, Q4) of the core of said reactor, and that said cluster fall signal (24) is generated when at least two of said sensitive parameters vary at a rate greater than said corresponding alarm thresholds, with one of said two parameters being one of said position parameters.

2. A method according to claim 1, characterized in that said second type of sensitive parameter and optionally a third type of sensitive parameter are constituted by neutron flux parameters representative of the nuclear power evolved in each of said zones (Q1, Q2, Q3, Q4) of the core or/and by heat flux parameters representative of the heat flux removed by cooling fluid flowing through each of said zones.

3. Apparatus for detecting the fall of a control cluster into the core of a nuclear reactor, said core comprising a plurality of zones (Q1, Q2, Q3, Q4) each (Q1) provided with:
heat measurement means (TA1, TB1, CP1) for providing a heat flux signal (P1) corresponding to said zone and representative of heat flux removed by the flow of a cooling fluid through said zone;
neutron measuring means (CF1) for providing a neutron flux signal (F1) corresponding to said zone and representative of nuclear power in said zone; and
a plurality of control clusters, with each of said control clusters being provided with measurement means (CZ1A, CZ1B, ...) for providing a cluster position signal (Z1A, Z1B, ...) representative of the position of said cluster;
said apparatus comprising differentiation and comparison means (12) for receiving signals sensitive to the displacements of the control clusters and for providing corresponding alarm signals whenever said sensitive signals vary at a rate greater than corresponding predetermined alarm thresholds; and
logical processor means for providing a cluster fall signal in the presence of certain ones of said alarm signals;
said apparatus being characterized by the fact that said alarm signals include at least signals of a first type and of a second type, said first type being constituted by position alarm signals (Z'1A, Z'1B, ..., Z'2A, Z'2B ..., Z'3A, Z'3B, ..., Z'4A, Z'4B, ...) corresponding to said cluster position signals (Z1A, Z1B, ..., Z2A, Z2B, ..., Z3A, Z3B, ..., Z4A, Z4B, ...), and a second type being constituted by heat alarm signals (P'1, P'2, P'3, P'4) corresponding to said heat flux signals (P1, P2, P3, P4) and/or by neutron alarm signals (F'1, F'2, F'3, F'4) corresponding to said neutral flux signals (F1, F2, F3, F4), said logic processing means (L1, L2, L3, L4, 14, 18, 22) providing said cluster fall signal (24) on receiving at least two of said alarm signals including at least one of said position alarm signals.

4. Apparatus according to claim 3, characterized in that said logic processing means comprise:
primary logic units (L1, L2, L3, L4) each of which (L1) receives said position alarm signals ((Z'2A, Z'2B, ...) corresponding to at least one of said core zones (Q2) and at least one of said second type alarm signals (F'1, P'4) corresponding to another of said zones (Q4), and for providing a primary detection signal (D1) when at least one of said alarm signals is present; and
a combination circuit (14, 18, 22) receiving said primary detection signals (D1, D2, D3, D4) and said position alarm signals (Z'1A, Z'1B, ..., Z'2A, Z'2B, ..., Z'3A, Z'3B ..., Z'4A, Z'4B, ...) and providing said cluster fall signal (24) when at least two of said primary detection signals and at least one of said position alarm signals are present.

5. Apparatus according to claim 4, characterized by the fact that said differentiation and comparison means (12) are associated with said primary logic units (L1, L2, L3, L4) in such a manner that, together with a corresponding portion of said means, each of said logic units (L1) constitutes an acquisition unit (U1).

6. Apparatus according to claim 5, characterized by the fact that said acquisition units (U1, U2, U3, U4) constitute a succession corresponding to the succession of said zones (Q1, Q2, Q3, Q4) in the core of the nuclear reactor.

7. Apparatus according to claim 6, characterized by the fact that each of said acquisition units (U1) receives a group of said cluster position signals (Z2A, Z2B, ...) corresponding to one of said core zones (Q2), said neutron flux signal (F1) corresponding to another core zone (Q1), and said heat flux signal (P4) corresponding to yet another core zone (Q4), such that said neutron flux signals (F1, F2, F3, F4), said heat flux signals (P1, P2, P3, P4), and said groups of cluster position signals (Z1A, Z1B, ..., Z2A, Z2B ..., Z3A, Z3B, ..., Z4A, Z4B, ...) are each received by one and one only of the acquisition units (U1, U2, U3, U4).

## Patentansprüche

1. Verfahren zur Erkennung des Absturzes eines Regelstabbündels eines Kernreaktors, demgemäß fortlaufend gegen die Bewegung der Regelstabbündel empfindliche Parameter dieses Reaktors gemessen werden, und ein Bündelabsturzsignal erzeugt wird, wenn einer dieser Parameter eine Veränderungsgeschwindigkeit aufweist, die eine diesem Parameter zugehörige festgelegte Alarmschwelle überschreitet,
dadurch **gekennzeichnet,** daß
solche empfindlichen Parameter gemessen werden, die zumindest einer ersten und einer zweiten Gruppe von Parametern zugehören, wobei die erste Gruppe aus Positionsparametern besteht, die die Positionen der Regelstabbündel selbst darstellen und wobei die zweite Gruppe aus Parametern besteht, die empfindlich gegen die Bewegung der Regelstabbündel selbst dann sind, wenn diese Bündel entfernt von den Punkten angebracht sind, wo diese Parameter gemessen werden,
daß die Parameter aus jeder dieser beiden Gruppen in zumindest zwei Bereichen (Q1, Q2, Q3, Q4) des Kerns des Reaktors gemessen werden, und daß das Bündelabsturzsignal (24) erzeugt wird, wenn mindestens zwei der empfindlichen Parameter eine Veränderungsgeschwindigkeit aufweisen, die die zugehörigen Alarmschwellen übersteigt, wobei einer dieser Parameter ein Positionsparameter ist.

2. Verfahren nach Anspruch 1,
dadurch gekennzeichnet, daß
die zweite und eventuell eine dritte Gruppe empfindlicher Parameter aus Neutronenflußparametern bestehen, die die in den Bereichen (Q1, Q2, Q3, Q4) des Kerns freigesetzten nuklearen Leistungen wiedergeben, und/oder aus Wärmeflußparametern, die die durch ein in diesen Bereichen zirkulierendes wärmetransportierendes Fluid abgeführten Wärmeflüsse wiedergeben.

3. Vorrichtung zur Erkennung des Absturzes eines Regelstabbündels eines Kernreaktors in dessen Kern, wobei der Kern mehrere Bereiche (Q1, Q2, Q3, Q4) aufweist, von denen jede (Q1) versehen ist mit:
- einer Wärmemeßvorrichtung (TA1, TB1, CP1), um ein diesem Bereich entsprechendes Wärmeflußsignal (P1) zu erzeugen, das den Wärmefluß wiedergibt, der durch den Umlauf eines wärmetransportierenden Fluids in diesem Bereich abgeführt wird,
- eine Neutronenmeßvorrichtung (CF1), um ein diesem Bereich entsprechendes Neutronenflußsignal (F1) zu erzeugen, das eine nukleare Leistung in diesem Bereich wiedergibt,
- mehrere Regelstabbündel, von denen jedes mit einer Meßvorrichtung (CZ1A, CZ1B ...) versehen ist, um ein Bündelpositionssignal (Z1A, Z1B ...) zu erzeugen, das die Position dieses Bündels wiedergibt,
wobei diese Vorrichtung Ableitungs- und Vergleichsvorrichtungen (12) zum Empfang von gegen die Bewegung der Regelstabbündel empfindlichen Signale und zur Erzeugung von entsprechenden Alarmsignalen, wenn diese empfindlichen Signale Veränderungsgeschwindigkeiten aufweisen, die die entsprechenden festgelegten Alarmschwellen überschreiten,
- und logische Verarbeitungsvorrichtungen zur Erzeugung eines Bündelabsturzsignals beim Vorliegen bestimmter dieser Alarmsignale, umfaßt,
- wobei diese Vorrichtung dadurch gekennzeichnet ist, daß die Alarmsignale mindestens zu einer ersten und einer zweiten Gruppe von Signalen gehören, wobei die erste Gruppe aus Positionsalarmsignalen (Z'1A, Z'1B, ..., Z'2A, Z'2B ..., Z'3A, Z'3B, ..., Z'4A, Z'4B, ..) besteht, die den Bündelpositionssignalen (Z 1A, Z 1B, ..., Z 2A, Z 2B ..., Z 3A, Z 3B, ..., Z 4A, Z 4B, ..) entsprechen und eine zweite Gruppe aus thermischen Alarmsignalen (P'1, P'2, P'3, P'4), die den Wärmeflußsignalen (P1, P2, P3, P4) entsprechen und/oder aus Neutronenalarmsignalen (F'1, F'2, F'3, F'4), die den Neutronenflußsignalen (F1, F2, F3, F4) entsprechen, bestehen, wobei die logischen Verarbeitungsvorrichtungen (L1, L2, L3, L4, 14, 18, 22) das Bündelabsturzsignal (24) liefern, wenn sie zumindest zwei Alarmsignale empfangen, von denen mindestens eines ein Positionsalarmsignal ist.

4. Vorrichtung nach Anspruch 3,
dadurch gekennzeichnet, daß
die logischen Verarbeitungsvorrichtungen umfassen:
- primäre logische Einheiten (L1, L2, L3, L4), von denen jede (L1) Positionsalarmsignale (Z'2A, Z'2B, ...), die mindestens einem der Bereiche des Kerns (Q2) entsprechen, und mindestens ein Alarmsignal (F'1, P'4), das einem anderen Bereich (Q4) entspricht, empfängt, und ein primäres Erkennungssignal (D1) liefert, wenn mindestens eines dieser Alarmsignale vorliegt,
- und ein Umgruppierungsschaltkreis (14, 18, 22), der die primären Erkennungssignale (D1, D2, D3, D4) und die Positionsalarmsignale (Z'1A, Z'1B, ..., Z'2A, Z'2B, ..., Z'3A, Z'3B, ..., Z'4A, Z'4B ...) empfängt und das Bündelabsturzsignal (24) erzeugt, wenn mindestens eines der primären Erkennungssignale und mindestens eines der Positionsalarmsignale vorliegt.

5. Vorrichtung nach Anspruch 4,
dadurch gekennzeichnet, daß
die Ableitungs- und Vergleichsvorrichtungen (12) mit den primären logischen Einheiten (L1, L2, L3, L4) so verbunden sind, daß jede dieser logischen Einheiten (L1) zusammen mit dem zugehörigen Teil dieser Vorrichtungen eine Erfassungseinheit (U1) bildet.

6. Vorrichtung nach Anspruch 5,
dadurch gekennzeichnet, daß
die Erfassungseinheiten (U1, U2, U3, U4) eine Abfolge bilden, die derjenigen der Abschnitte (Q1, Q2, Q3, Q4) des Kerns des Kernreaktors entspricht.

7. Vorrichtung nach Anspruch 6,
dadurch gekennzeichnet, daß
jede Erfassungseinheit (U1) eine einem Abschnitt des Kerns (Q2) entsprechende Gruppe von Bündelpositionssignalen (Z2A, Z2B, ...), das einem anderen Abschnitt des Kerns (Q1) entsprechende Neutronenflußsignal (F1) und das einem weiteren Abschnitt des Kerns (Q4) entsprechende Wärmeflußsignal (P4) empfängt, so daß die Neutronenflussignale (F1, F2, F3, F4), die Wärmeflußsignale (P1, P2, P3, P4) und die Bündelpositionssignale (Z1A, Z1B, Z2A, Z2B, ..., Z3A, Z3B ..., Z4A, Z4B ...) von einer und nur einer Erfassungseinheit (U1, U2, U3, U4) empfangen werden.
